Europäisches Patentamt

(19) European Patent Office

Office européen des brevets

(11) Publication number: **0 109 308**
**B1**

(12) **EUROPEAN PATENT SPECIFICATION**

(45) Date of publication of patent specification: **04.04.90**

(21) Application number: **83306967.7**

(22) Date of filing: **15.11.83**

(60) Divisional application 88120811.0 filed on 15/11/83.

(51) Int. Cl.⁵: **G 06 F 13/28**, G 06 F 13/12

(54) Block counter system to monitor data transfer.

(30) Priority: **16.11.82 US 442159**

(43) Date of publication of application: **23.05.84 Bulletin 84/21**

(45) Publication of the grant of the patent: **04.04.90 Bulletin 90/14**

(84) Designated Contracting States: **BE DE FR GB NL SE**

(56) References cited:
**EP-A-0 055 623**
**EP-A-0 059 823**
**US-A-4 357 681**

**IBM TECHNICAL DISCLOSURE BULLETIN, vol. 23, no. 8, january 1981, pages 3874-3881, New York, US; A.L. BERGEY et al.: "Pad characters generation and deletion mechanism"**

(73) Proprietor: **UNISYS CORPORATION**
**1, Burroughs Place**
**Detroit Michigan 48232 (US)**

(72) Inventor: **Sheth, Jayesh V.**
**25652 Rimgate Drive**
**El Toro, Ca. 92630 (US)**

(74) Representative: **Kirby, Harold Douglas Benson et al**
**G.F. Redfern & Company Marlborough Lodge 14 Farncombe Road**
**Worthing West Sussex BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention is related to systems where data transfers are effected between a peripheral terminal unit and a main host computer wherein an intermediate I/O subsystem is used to perform the housekeeping duties of the data transfer.

A continuing area of developing technology involves the transfer of data between a main host computer system and one or more peripheral terminal units. To this end, there have been developed I/O subsystems which are used to relieve the monitoring and housekeeping problems of the main host computer and to assume the burden of controlling a peripheral terminal unit and to monitor control of data transfer operations which occur between the peripheral terminal unit and the main host computer system.

A particular embodiment of such an I/O subsystem has been developed which uses peripheral controllers known as data link processors whereby initiating commands from the main host computer are forwarded to a peripheral-controller which manages the data transfer operations with one or more peripheral units. In these systems the main host computer also provides a "data link word" which identifies each task that has been initiated for the peripheral-controller. After the completion of a task, the peripheral-controller will notify the main host system with a result/descriptor word as to the completion, incompletion or problem involved in the particular task.

These types of peripheral-controllers have been described in a number of patents issued to the assignee of the present disclosure and these patents are included herein by reference as follows:

U.S. Patent 4,106,092 issued August 8, 1978, entitled "Interface System Providing Interfaces to Central Processing Unit and Modular Processor-Controllers for an Input-Output Subsystem", inventor D.A. Millers, II.

U.S. Patent 4,074,352 issued February 14, 1978, entitled "Modular Block Unit for Input-Output Subsystem", inventors D.J. Cook and D.A. Millers, II.

U.S. Patent 4,162,520 issued July 24, 1979, entitled "Intelligent Input-Output Interface Control Unit for Input-Output Subsystem", inventors D.J. Cook and D.A. Millers, II.

U.S. Patent 4,189,769 issued February 19, 1980, entitled "Input-Output Subsystem For Digital Data Processing System", inventors D.J. Cook and D.A. Millers, II.

U.S. Patent 4,280,193 issued July 21, 1981, entitled "Data Link Processor for Magnetic Tape Data Transfer System", inventors K.W. Baun and J.G. Saunders.

U.S. Patent 4,313,162 issued January 26, 1982, entitled "I/O Subsystem Using Data Link Processors", inventors K.W. Baun and D.A. Millers, II.

U.S. Patent 4,322,792 issued March 30, 1982, entitled "Common Front-End Control for a Peripheral Controller Connected to a Computer", inventor K.W. Baun.

The above patents, which are included herein by reference, provide a background understanding of the use of the type of peripheral-controlers known as "data link processors", DLP, used in a data transfer network between a main host computer and peripheral terminal unit.

In the above mentioned Baun patent, there was described a peripheral-controller which was built of modular components consisting of a common front end control circuit which was of a universal nauture for all types of peripheral controllers and which was connected with a peripheral dependent board circuit. The peripheral dependent circuit was particularized to handle the idiosyncrasies of specific peripheral terminal units.

The present disclosure likewise uses a peripheral-controller (data link processor) which follows the general pattern of the above described system, in that the peripheral-controller uses a common control circuit or common front end which works in coordination with a peripheral dependent circuit which is particularly suited to handle a specific type of peripheral terminal unit, such as a Tape Control Unit (TCU) which connects to one or more magnetic tape units.

US—A—4 293 928 discloses a system using a peripheral-dependent circuit board for providing the specific functions required for data transfers between a peripheral terminal unit and a peripheral-controller including a common control circuit card. The peripheral-dependent circuit board provides logic means for executing micro code word operators received from the common control circuit card and provides means for selecting a source of data that is to be transmitted for temporary storage in a buffer memory. The peripheral-dependent board also provides address logic means for formulating addresses to be used for reading and writing of data out of and into the buffer memory.

EP—A—0 059 823 discloses an information signal storage sub-system having a plurality of addressable tape recorders and a control unit including a buffer. Blocks of signals are transferred between a plurality of processors and the buffer, and between the buffer and the tape recorders. Such blocks are counted in a block counter and the counts stored in storage areas. The counts define current signal transfer status of the buffer.

The invention relates to a system for monitoring the status of data-in-transit between a peripheral unit and a main host system, said system comprising: buffer memory means for temporary data storage, said buffer memory means being connected to receive data from, and to transmit data to, both said main host system and said peripheral unit; counter means for maintaining a current status signal which indicates the amount of data residing in temporary storage in said buffer memory means; and logic circuit means for providing signal data to said counter means to raise or lower said status signal.

The invention is characterised in that said logic circuit means includes address register means for receiving address data to be used in accessing locations in said memory means and for providing numerical data signals to a block counter logic unit, which numerical data signals indicate the number of data blocks transferred into, and the number of data blocks transferred out of, said memory means; wherein said block counter logic unit provides first and second logic output signals to gating means which pass output signals to said counter means, said output signals operating to shift up or shift down the count in said counter means at selected clock times; and in that said logic circuit means also includes output flip-flop means receiving signals from said counter means, and providing a first output information signal when the count in said counter means is equal to "X" indicating that the said buffer memory means is full, where "X" represents the number of data blocks filling the maximum data capacity of said buffer memory means, and a second ouput information signal when the count in said counter means is equal to "0" denoting that the said buffer memory means is empty.

EP—A—0316020 divided from the present Specification is directed to the provision of signal output means responsible for passing information to a common control circuit concerning the number of data blocks received in the buffer memory means, said common control circuit being operative, when the buffer memory means is filled, to disconnect the host computer from the buffer and connect the tape unit to the buffer.

Thus, the present disclosure describes a block counter monitoring system which will inform the peripheral-controller and the main host system of the "numerical block status" of data in the RAM buffer memory means.

In particular, the present invention discloses a system whereby the common front end (common control) circuit uses routines providing microcode instructions to address registers which access locations in the RAM buffer memory for the insertion of data or the withdrawal of data. There are two address registers, one for addresses of data taken from/to the peripheral unit and one for addresses of data which are to be forwarded from/ to the main host computer.

A block counter logic circuit receives input from the peripheral address register and the system address register. In addition, a flip-flop output to the block counter logic circuit indicates the direction of data flow as being a "Write" (host-to-peripheral) or a "Read" (peripheral-to-Host). The block counter logic circuit provides two output logic signals which control a block counter. This enables the block counter to be shifted up or shifted down so that the internal signal data indicates the number of blocks of data residing in the RAM buffer memory. Certain parameters may be set to trigger signal output conditions when the amount of data in the RAM buffer memory falls below a certain figure.

Brief description of the drawings

Fig. 1 illustrates the block counter system of the present disclosure which is used to inform the data transfer system of the status of a buffer memory means.

Fig. 2 is a system diagram showing the host computer cooperating with a peripheral-controller in order to control data transfer to and from a peripheral unit.

Fig. 3 is a drawing showing an eight bit shift register which can be shifted up or down according to conditions which occur between certain logic signals and clock signals.

Fig. 4 is a diagram showing how the block counter logic unit of Fig. 1 is organized to operate during Read or Write operations and the effect of either shifting up or shifting down the shift register.

Fig. 5A is a schematic drawing illustrating the significance of each bit-position in the block counter.

Fig. 5B is a chart indicating various "shift" relationships of the block counter with regard to "Read" and "Write" operations.

A "Read" operation takes data from a peripheral magnetic tape unit and temporarily stores it in a RAM memory buffer for later transfer to the host system.

A "Write" operation takes data from the main host system for temporary storage in the RAM buffer memory for subsequent transfer to a selected magnetic tape unit via a TCU or Tape Control Unit.

Description of preferred embodiments

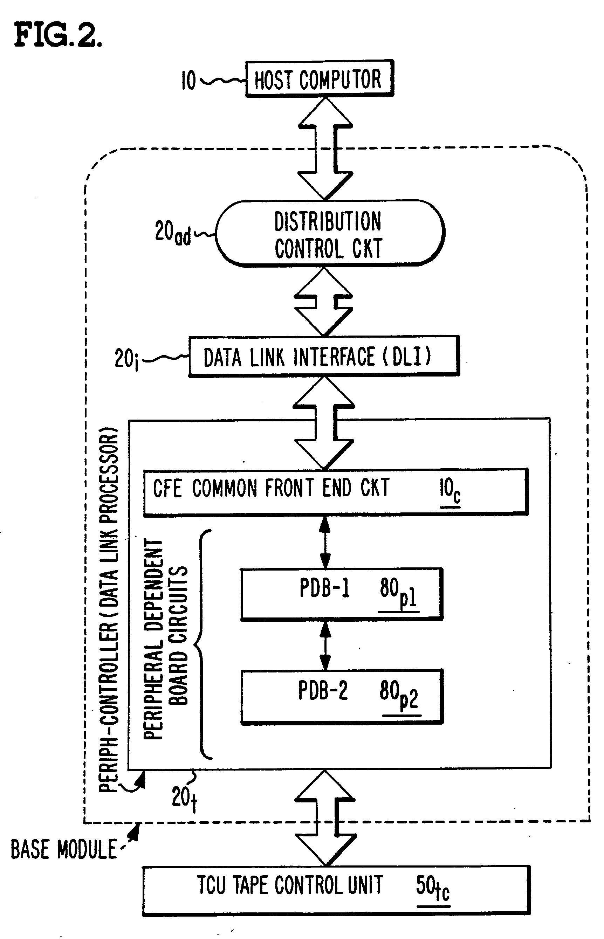

Referring to Fig. 2, the overall system diagram is shown whereby a host computer 10 is connected through an I/O subsystem to a peripheral unit, here for illustrative purposes shown as a tape control unit $50_{tc}$. As per previous descriptions in the above cited patents which were included by reference, the I/O subsystem may consist of a base module which supports one or more peripheral-controllers, in addition to other connection and distribution circuity such as the distribution control circuit $20_{od}$ and the data link interface $20_i$. The peripheral-controller $20_t$ is shown in modular form as being composed of a common front end circuit $10_c$ and a peripheral dependent circuit shown, in this case, as being composed of two peripheral dependent boards designated $80_{p1}$ and $80_{p2}$.

In this network situation, it is often desired that data from the main host computer be transferred on to a peripheral unit, such as a magnetic tape unit, for recording on tape. This would be done by a peripheral tape control unit TCU such as $50_{tc}$. Likewise, at times it is desired that data from the magnetic tape unit be passed through the tape control unit to be read out by the host computer. Thus, data is transferred in a bidirectional sense, that is, in two directions at various times in the activities of the network.

The key monitoring and control unit is the data link processor 20, which when initiated by specific commands of the host computer will arrange for the transfer of the desired data in the desired direction.

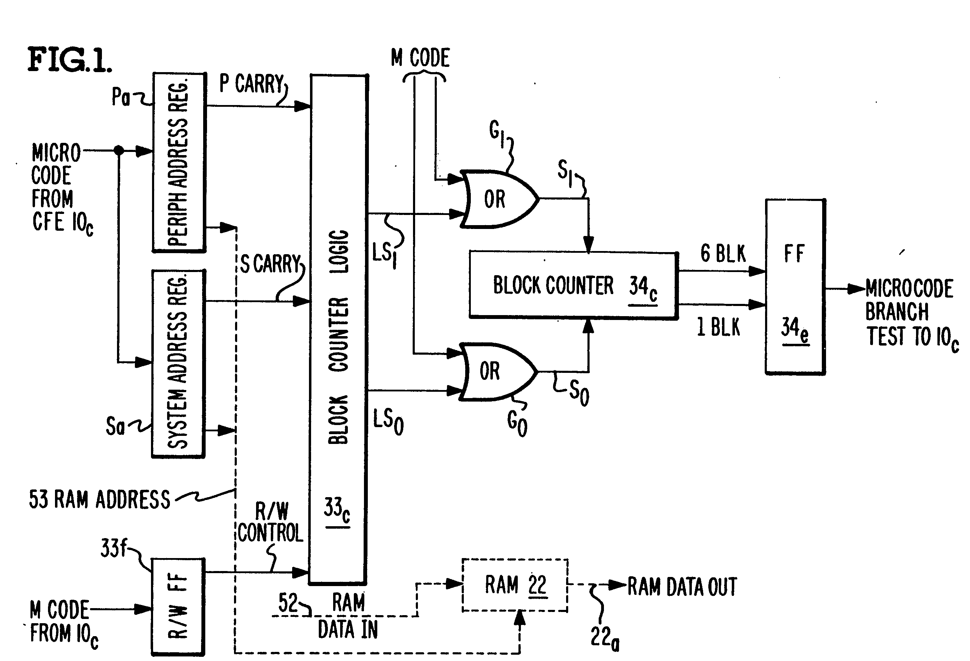

As seen in Fig. 1, the RAM buffer 22 is used for temporary storage of data being transferred between peripherals and the main host computer. In the preferred embodiment this RAM buffer has the capability of storing at least six "blocks" of data, each block of which consists of 256 words.

Again referring to Fig. 1, a block counter logic unit $33_c$ is used to receive input from two address registers designated as the peripheral address register, $P_a$, and the system address register, $S_a$. The peripheral address register, $P_a$, handles addresses required when data is retrieved from the peripheral tape unit or when data is being sent to the peripheral tape unit. The system address register, $S_a$, is used when data is being received from the host system into the buffer 22 when data is being sent to the host system from the buffer 22. These two address registers in Fig. 1 are seen to receive their address data via microcode signals from the common front end circuit $10_c$ of Fig. 1.

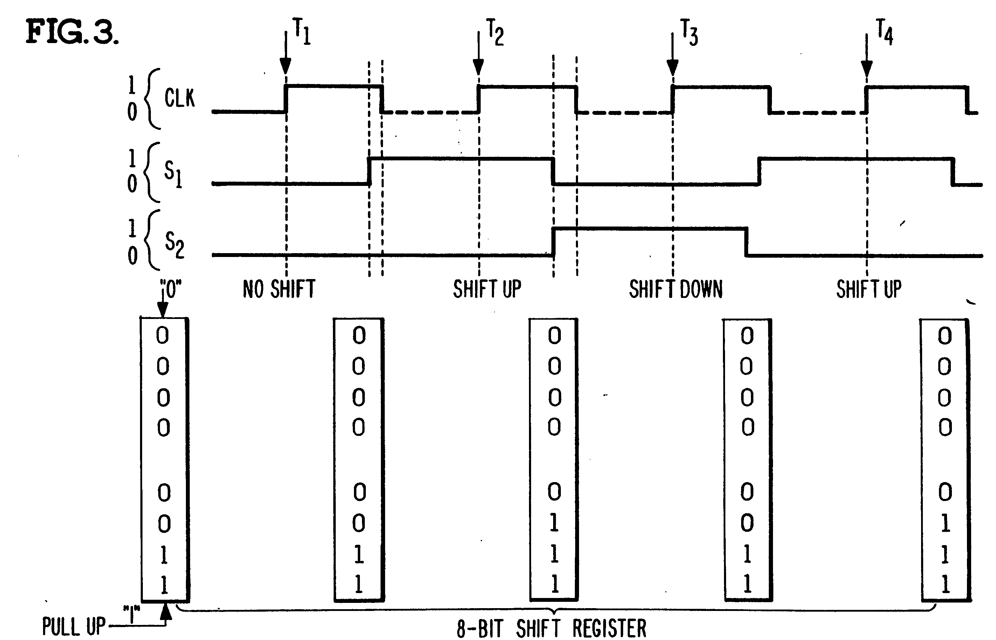

The address data outputs from $P_a$ and $S_a$ are fed to the RAM buffer 22 in order to address the desired location in the buffer memory. Further, the block counter logic unit $33_c$ receives one input designated "P Carry" from the peripheral address register and another input "S Carry" from the system address register, in addition to a Read/Write control signal from read-write flip-flop $33_f$. The flip-flop $33_f$ is controlled by microcode signals from the peripheral-controller common front end unit $10_c$. The block counter logic unit $33_c$ provides a first logic signal $LS_1$ and a second logic signal $LS_0$ which are fed to OR gates $G_1$ and $G_0$. These gates also have additional inputs from the microcode of the common front end card $10_c$ which inputs can be used to simulate the $LS_1$ and $LS_0$ signals for diagnostic or other control purposes. The OR gates provide two output signals designated $S_1$ and $S_0$ which are fed to the block counter $34_c$. As will be seen in Fig. 3, the output signals $S_1$ and $S_0$ are combined at certain times on occurrence of rising clock signals in order to provide conditions which will make the block counter either "shift up" or "shift down" or "no shift".

Referring to Fig. 3, there is seen a schematic drawing which illustrates the use of the block counter $34_c$ of Fig. 1.

Referring to Fig. 3, there is seen, schematically, an eight bit shift register which will be affected at selected points in time where the clock signal is in its "rising" state as illustrated by the arrows shown in Fig. 3. Referring to the leftmost schematic of the shift register, it will be seen that there are two "ones" which illustrate that the RAM buffer 22 has been loaded with two full blocks of data. At time $T_1$ it will be seen that conditions are such that "no shift" has occurred and the two "ones" remain in the shift register. At time $T_2$ there is a "shift up" and the shift register now has three bits with the "1" signal. At time $T_3$ there is a "shift down" signal and the shift register is back where two bit positions include a "1". At time $T_4$ there is a "shift up" and the shift register now has three bit positions manifesting the "1" signal, which indicates three full blocks of data residing in buffer 22 at that moment.

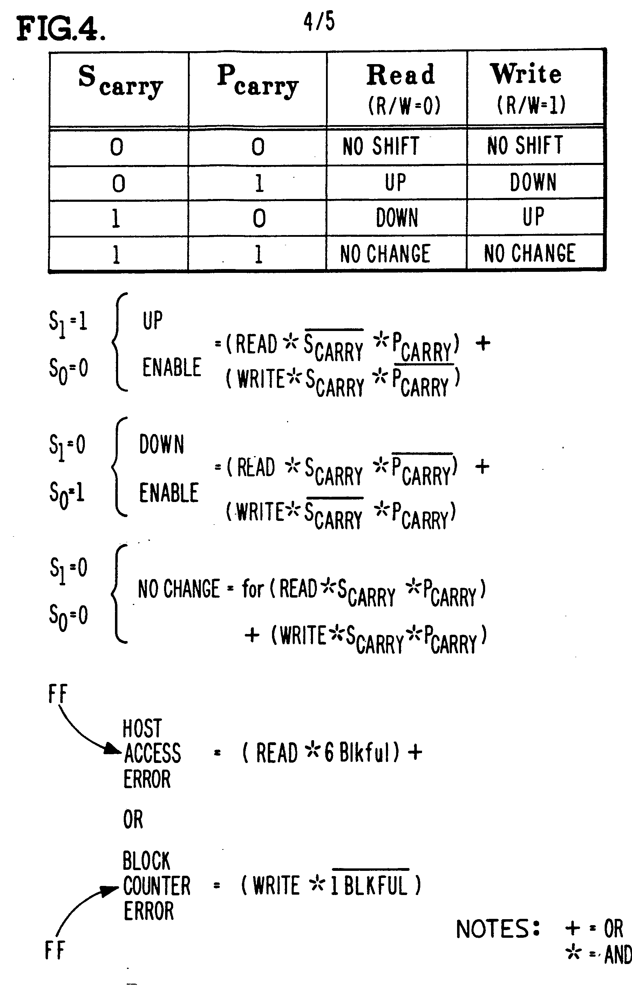

Referring to Fig. 4, there is seen a chart whereby the block counter logic unit $33_c$ is organized to show overall operating conditions. Thus, as seen in the Fig. 4 chart, the conditions of the S Carry and P Carry during the "Read" condition show that there is a no shift or no change when S Carry and P Carry are the same, that is to say they are both 0 or they are both 1.

However, when S Carry is "0" and the P Carry is equal to "1", then there is an up shift, while if the S carry is "1" and the P Carry is "0", there is a down shift during "Read" operations.

Referring to Fig. 4, it is seen that during "Write" operations, again when the S Carry and the P Carry are equal (both "0" or both "1") to each other , then there is no change or shift in the shift register. However, when the S Carry equals "0" and the P Carry equals "1" there is a down shift in this situation, and when the S Carry is equal to "1" and the P Carry is equal to "0" there is an up shift.

The block counter $34_c$ will reflect the situation that when data is being taken out of the magnetic tape unit in order to be fed to RAM buffer 22 ("Read" operation), the block counter will shift up unless at the same time there is data being removed from buffer 22 for transfer to the main host computer system in which case the block counter will shift down. Thus, the condition of the block counter's numerical status will indicate the "balance" between what data has gone out of and what data has come into the buffer 22.

Referring to Fig. 4, if there is a "Write" operation, this determines that data is to be written into the magnetic tape unit. Then, as data is removed from the RAM buffer over to the magnetic tape unit, the block counter will shift down but if more data is transferred from the main host computer into the RAM buffer 22, the block counter will be shifted up. Thus, again the placement of "ones" in various bit positions provides a running balance of the data blocks taken out as against the data blocks taken in at any given period.

Referring to Fig. 4 there are cetain logic equations which indicate the logic used in the block counter logic unit $33_c$.

In the following logic equations it should be indicated that the asterisk refers to AND logic operation while the plus sign refers to OR logic operation.

(a) If signal counter $S_1$ equals "1" and signal $S_0$ equals "0", there occurs what may be called a condition of "Up enable" which is equal to (Read * $\overline{\text{S Carry}}$ * P Carry) + (Write * S Carry * $\overline{\text{P Carry}}$).

(b) Under the conditions where the signal $S_1$ equals "0" and the signal $S_0$ equals "1", this could be considered as a "Down enable" which is equal to (Read * S Carry * $\overline{\text{P Carry}}$) + (Write * $\overline{\text{S Carry}}$ * P Carry).

(c) In the condition where the signal $S_1$ equals "0" and the signal $S_0$ equals "0", there is the condition called "no change". This is equal to (Read * S Carry * P Carry) + (Write * S Carry * P Carry).

(d) The condition known as the "host access error", $H_e$ causes the setting of a flip-flop $34_e$, Fig. 1. (This is also called a block counter error). Thus, the host access error signal or block counter error signal is a result of:

$H_e$=(Read * 6 BLKFUL) + (Write * $\overline{\text{1 BLKFUL}}$).

thus, on a Read operation, a full RAM buffer (six blocks of data) will signal an error condition.

Likewise, on a Write operation, a single (one) remaining block of data will trigger an error condition.

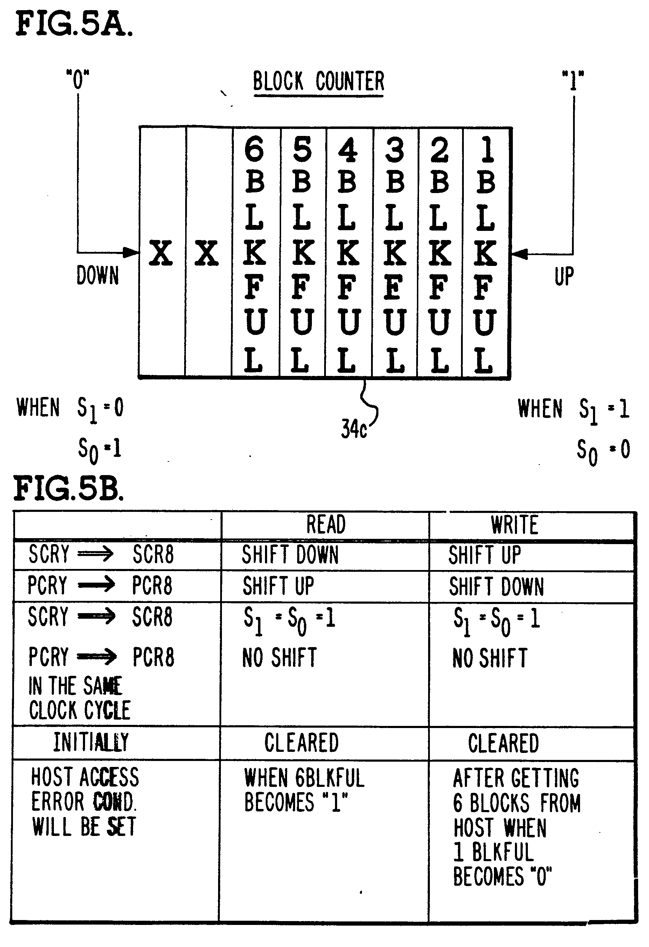

Referring to Fig. 5A, a schematic drawing of the block counter $34_c$ is shown to indicate that when a "1" resides in a series of bit positions, it is an indication of how many blocks of data reside in the RAM buffer 22 (Fig. 1).

For example, if a "1" resides in each of bit positions 1, 2, 3, 4, this indicates that "4" blocks" of data reside in RAM 22. Each "block" consists of 256 words (512 bytes of eight bits each).

in Fig. 5B the chart illustrates that during "Read" operations:

(a) As the P Carry increases (data being transferred from peripheral tape to buffer memory 22), the block counter $34_c$ will "shift up" indicating the buffer is being "loaded".

(b) As the S Carry increases (data from buffer memory being transferred to main host system), the block counter $34_c$ will "shift down" indicating the buffer memory is being "emptied".

In Fig. 5B the chart illustrates that during "Write" operations:

(c) As S Carry increases (data being loaded in buffer memory from main host system), the block counter $34_c$ will "shift up" to indicate the number of blocks of data in the buffer.

(d) As P Carry increases (data in buffer being unloaded for transfer to peripheral tape unit), the block counter $34_c$ will "shift down" and show how much data is left remaining in buffer 22.

In Fig. 5B, during "Read" operations, when a "1" appears in the 6th bit position of block counter $34_c$, then a flip-flop circuit $34_e$ (Fig. 1) is "set" and provides a signal to the common front end circuit $10_c$ which will inform the main system of an "access-error" condition. This signifies that the buffer memory 22 was "overfilled" in that the main host system did not accept data quickly enough.

During "Write" operations, when the buffer memory 22 has received six blocks of data from the host system, and the 1st bit position (1 BLKFUL) becomes "0", this indicates that the buffer memory has been completely unloaded (cleared) and then the flip-flop $34_e$ is set to signal the common front end circuit $10_c$ that more data is required from the host. This indicates the host did not supply data quickly enough to the RAM buffer 22.

There has been thus described a system by which it is possible to monitor blocks of data being transferred between peripheral units and a main host computer when there are simultaneous flows of data being put into or taken out of a RAM buffer means.

**Claims**

1. A system for monitoring the status of data-in-transit between a peripheral unit ($50_{tc}$) and a main host system (10), said system comprising; buffer memory means (22) for temporary data storage, said buffer memory means being connected to receive data from, and to transmit data to, both said main host system and said peripheral unit; counter means ($34_c$) for maintaining a current status signal which indicates the amount of data residing in temporary storage in said buffer memory means; and logic circuit means for providing signal data to said counter menas to raise or lower said status signal, characterised in that said logic circuit means includes address register means (Fig. 1) for receiving address data to be used in accessing locations in said memory means and for providing numerical data signals to a block counter logic unit ($33_c$), which numerical data signals indicate the number of data blocks transferred into, and the number of data blocks transferred out of, said memory means; wherein said block counter logic unit provides first and second logic output signals to gating means ($G_0$ & $G_1$) which pass output signals ($S_0$ & $S_1$) to said counter means, said output signals operating to shift up or shift down the count in said counter means at selected clock times; and in that said logic circuit means also includes output flip-flop means ($34_e$) receiving signals from said counter means, and providing a first output information signal when the count in said counter means is equal to "X" indicating that the said buffer memory means is full, where "X" represents the number of data blocks filling the maximum data capacity of said buffer memory means, and a second output information signal when the count in said counter means is equal to "0" denoting that the said buffer memory means is empty.

2. A system according to Claim 1, wherein said logic circuit means provides said signal data during two conditions of data transfer operations, said conditions including: read operations wherein data is transferred from a peripheral unit to said memory means for subsequent transfer to said main host computer system; write operations wherein data is transferred from said main host system to said memory means for subsequent transfer to said peripheral unit.

3. A system according to Claim 1 or Claim 2, wherein said address register means includes: peripheral address register means (Pa) connected to receive address data when data is transferred either from the said memory means to said peripheral unit or when data is transferred from said peripheral unit to said memory means; and system address register means (Sa) connected to receive address data when data is transferred either from said memory means to said main host system, or from said main host system to said memory means.

4. A system according to any of the preceding claims, wherein said logic circuit means includes: means for signalling said block counter logic unit to indicate the condition of a "Read" operation from the said peripheral unit or a "Write" operation from the said main host computer to the said peripheral unit.

## Patentansprüche

1. Ein System zur Überwachung des Status eines Datendurchlaufs zwischen einer Peripherieeinheit ($50_{tc}$) und einem Hauptverarbeitungssystem (10), wobei das System enthält: Pufferspeichermittel (22) zur zeitweisen Datenspeicherung, wobei die Pufferspeichermittel angeschlossen sind, um Daten von dem Hauptverarbeitungssystem und der Peripherieeinheit zu empfangen und Daten zu diesem zu Übertragen; Zählmittel ($34_c$) zur Aufrechterhaltung eines Stromstatussignales, das die Menge der Daten anzeigt, die sich zur zeitweisen Speicherung in den Pufferspeichermitteln befinden; und logische Schaltungsmittel zur Übermittlung von Signaldaten an die Zählmittel, um das Statussignal zu erhöhen oder zu erniedrigen, dadurch gekennzeichnet, daß die logischen Schaltungsmittel Adressenregistermittel (Fig. 1) zum Empfang von Adressdaten, die an zugänglichen Plätzen in den Speichermitteln zu verwenden sind, und zur Übermittlung numerischer Datensignale zu einer logischen Blockzählereinheit ($33_c$) enthalten, wobei die numerischen Datensignale die Anzahl der Datenblöcke, die zu den Speichermitteln übertragen wurden, und die Anzahl der Datenblöcke, die aus den Speichermitteln ausgegeben wurden, anzeigen; wobei die logische Blockzählereinheit erste und zweite logische Ausgangssignale an Gattermittel ($G_0$ & $G_1$) übermittelt, die Ausgangssignale ($S_0$ & $S_1$) an die Zählmittel übertragen, wobei die Ausgangssignale ein Hockschieben oder Herunterschieben des Zählstandes in den Zählmitteln zu ausgewählten Zählzeiten bewirken; und daß die logischen Schaltungsmittel ebenfalls Ausgangs-Flip-Flop-Mittel ($34_e$) enthalten, die Signale von den Zählmitteln empfangen und eine erstes Ausgangsinformationssignal, wenn der Zählstand in den Zählmitteln gleich "X" ist, was bedeutet, daß die Pufferspeichermittel vol sind, wobei "X" die Anzahl der die maximale Datenkapazität der Pufferspeichermittel füllenden Datenblöcke darstellt, und ein zweites Ausgangsinformationssignal bilden, wenn der Zählstand in den Zählmitteln gleich "0" ist, was bedeutet, daß die Pufferspeichermittel leer sind.

2. Ein System nach Anspruch 1, bei welchem die logischen Schaltungsmittel die Signaldaten während zweier Zustände der Datenübertragungsoperationen erzeugen, wobei die Zustände enthalten: Leseoperationen, bei welchen Daten von einer Peripherieeinheit zu den Speichermitteln für den nachfolgenden Transfer zum Hauptverarbeitungscomputersystem übertragen werden; Schreiboperationen, bei welchen Daten von dem Hauptverarbeitungssystem zu Speichermitteln für den nachfolgenden Transfer zur Peripherieeinheit übertragen werden.

3. Ein System nach Anspruch 1 oder Anspruch 2, bei welchem die Adressenregistermittel enthalten: Peripherieadressenregistermittel (Pa), die angeschlossen sind, um Adressdaten zu empfangen, wenn Daten entweder von den Speichermitteln zur Peripherieeinheit übertragen werden oder wenn Daten von der Peripherieeinheit zu den Speichermitteln übertragen werden; und Systemadressenregistermittel (Sa), die angeschlossen sind, um Adressdaten zu empfangen, wenn Daten entweder von den Speichermitteln zum Hauptverarbeitungssystem oder von dem Hauptverarbeitungssystem zu den Speichermitteln übertragen werden.

4. Ein System nach einem der vorangegangenen Ansprüche, bei welchem die logischen Schaltungsmittel enthalten:
Mittel zur Signalisierung der logischen Blockzählereinheit, um den Zustand einer "Lese"-Operation aus der Peripherieeinheit oder einer "Schreib"-Operation vom Hauptverarbeitungscomputer an die Peripherieeinheit anzuzeigen.

## Revendications

1. Système de contrôle de l'état du transfert de données échangées entre une unité périphérique ($50_{tc}$) et un système d'hôte principal (10), ce système comportant:
une mémoire tampon (22) pour inscrire provisoirement des données, cette mémoire tampon pouvant recevoir des données ou envoyer des données pour le système d'hôte principal et l'unité périphérique; un compteur ($34_c$) pour conserver un signal d'état courant indiquant la quantité de données résidant dans la mémoire provisoire de la mémoire tampon et un circuit logique pour fournir des données de signal au compteur pour augmenter ou abaisser le signal d'état, système caractérisé en ce que le circuit logique comprend un registre d'adresses (Figure 1) recevant les données d'adresses à utiliser pour accéder aux positions de la mémoire et pour fournir des signaux de données numériques à une logique de compteur de blocs ($33_c$), signaux de données transférés dans la mémoire et le nombre de blocs de données sortis de la mémoire, la logique de comptage de blocs donnant un premier et un second signal logique de sortie pour la porte ($G_0$ & $G_1$) qui laisse passer les signaux de sortie ($S_0$ & $S_1$) vers le compteur, ces signaux de sortie assurant le décalage vers le haut ou le décalage vers le bas de l'état de comptage dans le compteur, à des instants d'horloge choisis, et en ce que le circuit logique comprend également un flip-flop de sortie ($34_e$)

qui reçoit des signaux du compteur et fournit un premier signal d'information de sortie lorsque l'état de comptage du compteur est égal à "X" indiquant que la mémoire tampon est pleine, "X" représentant le nombre de blocs de données remplissant la capacité maximale de données de la mémoire tampon et un second signal d'information lorsque l'état de comptage du compteur est égal à "0" indiquant que la mémoire tampon est vide.

2) Système selon la revendication 1, caractérisé en ce que le circuit logique fournit les données au cours de deux conditions d'opérations de transfert de données, ces conditions comprenant: opération de lecture avec transfert de données d'une unité périphérique vers la mémoire pour l'échange ultérieur vers le système de l'ordinateur hôte principal; opération d'écriture avec transfert des donnés du système d'hôte principal vers la mémoire pour le transfert ultérieur vers l'unité périphérique.

3. Système selon la revendication 1 ou la revendication 2, caractérisé en ce que le registre d'adresses comprend: un registre d'adresses périphériques (Pa) recevant les données d'adresses lorsque les données sont transférées soit de la mémoire vers le périphérique, soit lorsque les données sont transférées du périphérique vers la mémoire et un registre d'adresses de système (Sa) recevant les données d'adresses lorsque les données sont transférées soit de la mémoire vers le système hôte prichipal, soit du système hôte principal vers la mémoire.

4. Système selon l'une quelconque des revendications précédentes, caractérisé en ce que le circuit logique comprend un moyen pour signaler à la logique du compteur de blocs qu'elle doit indiquer la condition d'une opération de "lecture" de l'unité périphérique ou une opération "d'écriture" de l'ordinateur hôte principal vers l'unité périphérique.

# FIG.1.

EP 0 109 308 B1

# FIG.2.

10 — HOST COMPUTOR

20ad — DISTRIBUTION CONTROL CKT

20i — DATA LINK INTERFACE (DLI)

PERIPH-CONTROLLER (DATA LINK PROCESSOR)

PERIPHERAL DEPENDENT BOARD CIRCUITS

CFE COMMON FRONT END CKT $10_c$

PDB-1 $80_{p1}$

PDB-2 $80_{p2}$

$20_t$

BASE MODULE

TCU TAPE CONTROL UNIT $50_{tc}$

# FIG.3.

# FIG.4.

| $S_{carry}$ | $P_{carry}$ | Read (R/W=0) | Write (R/W=1) |
|---|---|---|---|
| 0 | 0 | NO SHIFT | NO SHIFT |
| 0 | 1 | UP | DOWN |
| 1 | 0 | DOWN | UP |
| 1 | 1 | NO CHANGE | NO CHANGE |

$S_1 = 1$
$S_0 = 0$ $\begin{cases} \text{UP} \\ \text{ENABLE} \end{cases}$ $= (\text{READ} * \overline{S_{CARRY}} * P_{CARRY}) + (\text{WRITE} * S_{CARRY} * \overline{P_{CARRY}})$

$S_1 = 0$
$S_0 = 1$ $\begin{cases} \text{DOWN} \\ \text{ENABLE} \end{cases}$ $= (\text{READ} * S_{CARRY} * \overline{P_{CARRY}}) + (\text{WRITE} * \overline{S_{CARRY}} * P_{CARRY})$

$S_1 = 0$
$S_0 = 0$ $\begin{cases} \text{NO CHANGE} = \text{for} (\text{READ} * S_{CARRY} * P_{CARRY}) \\ \qquad + (\text{WRITE} * S_{CARRY} * P_{CARRY}) \end{cases}$

FF $\rightarrow$ HOST ACCESS ERROR $= (\text{READ} * 6 \text{ Blkful}) +$

OR

FF $\rightarrow$ BLOCK COUNTER ERROR $= (\text{WRITE} * \overline{1 \text{ BLKFUL}})$

NOTES: $+ = \text{OR}$
$* = \text{AND}$

# FIG.5A.

**"0"**        <u>BLOCK COUNTER</u>        **"1"**

| X | X | 6 B L K F U L L | 5 B L K F U L L | 4 B L K F U L L | 3 B L K F U L L | 2 B L K F U L L | 1 B L K F U L L |

DOWN →                    ← UP

WHEN $S_1 = 0$         34c         WHEN $S_1 = 1$

$S_0 = 1$                           $S_0 = 0$

# FIG.5B.

| | READ | WRITE |
|---|---|---|
| SCRY ⟹ SCR8 | SHIFT DOWN | SHIFT UP |
| PCRY ⟹ PCR8 | SHIFT UP | SHIFT DOWN |
| SCRY ⟹ SCR8<br><br>PCRY ⟹ PCR8<br>IN THE SAME<br>CLOCK CYCLE | $S_1 = S_0 = 1$<br><br>NO SHIFT | $S_1 = S_0 = 1$<br><br>NO SHIFT |
| INITIALLY | CLEARED | CLEARED |
| HOST ACCESS<br>ERROR COND.<br>WILL BE SET | WHEN 6BLKFUL<br>BECOMES "1" | AFTER GETTING<br>6 BLOCKS FROM<br>HOST WHEN<br>1 BLKFUL<br>BECOMES "0" |